## Europäisches Patentamt
## European Patent Office
## Office européen des brevets

(19)

(11) Numéro de publication: **0 077 995**
**B1**

(12) **FASCICULE DE BREVET EUROPEEN**

(45) Date de publication du fascicule du brevet:
27.03.85

(51) Int. Cl.⁴: **F 24 J 3/00**, B 01 D 3/00

(21) Numéro de dépôt: **82109639.3**

(22) Date de dépôt: **19.10.82**

(54) **Installation de chauffage d'un fluide à l'aide d'une pompe à chaleur fonctionnant à partir d'une source froide constituée par une solution chargée ou corrosive.**

(30) Priorité: **23.10.81 FR 8119923**

(43) Date de publication de la demande:
**04.05.83 Bulletin 83/18**

(45) Mention de la délivrance du brevet:
**27.03.85 Bulletin 85/13**

(84) Etats contractants désignés:
**BE CH DE FR GB IT LI SE**

(56) Documents cités:
**EP - A - 0 000 192**
**EP - A - 0 005 825**
**DE - C - 964 504**
**US - A - 3 091 098**
**US - A - 3 234 109**
**US - A - 3 869 351**

(73) Titulaire: **ALSTHOM-ATLANTIQUE Société Anonyme dite:, 38, avenue Kleber, F-75794 Paris Cédex 16 (FR)**

(72) Inventeur: **Conan, Jean, Kercradet en Saint Lyphard, F-44410 Herbignac (FR)**

(74) Mandataire: **Weinmiller, Jürgen et al, Zeppelinstrasse 63, D-8000 München 80 (DE)**

## Description

La présente invention concerne une installation de chauffage d'un fluide à l'aide d'une pompe à chaleur fonctionnant à partir d'une source froide constituée par une solution chargée ou corrosive.

De grandes quantités de calories sont contenues dans divers effluents industriels liquides qui peuvent être utilisées dans des installations de chauffage par pompe à chaleur. Cependant, dans beaucoup de cas ces effluents sont constitués par des solutions très visqueuses, très calcaires ou contenant des produits agressifs conduisant à une baisse de rendement ou à une détérioration de l'évaporateur de la pompe à chaleur. Il en est de même en ce qui concerne les eaux géothermiques.

La présente invention à pour but de permettre d'utiliser de tels liquides entartrants ou corrosifs dans des systèmes de pompe à chaleur en évitant l'entartrage et la corrosion de l'évaporateur.

L'invention a ainsi pour objet une installation de chauffage d'un fluide à l'aide d'une pompe à chaleur fonctionnant à partir d'une source froide constituée par une solution chargée ou corrosive, comprenant au moins un évaporateur, un compresseur, un condenseur, un fluide de cycle, le condenseur étant refroidi par le fluide à chauffer, caractérisée en ce qu'elle comprend des moyens de détente et de vaporisation au moins partielle de ladite solution de la source froide et en ce que vapeur produite est ensuite dirigée vers l'évaporateur où elle se condense.

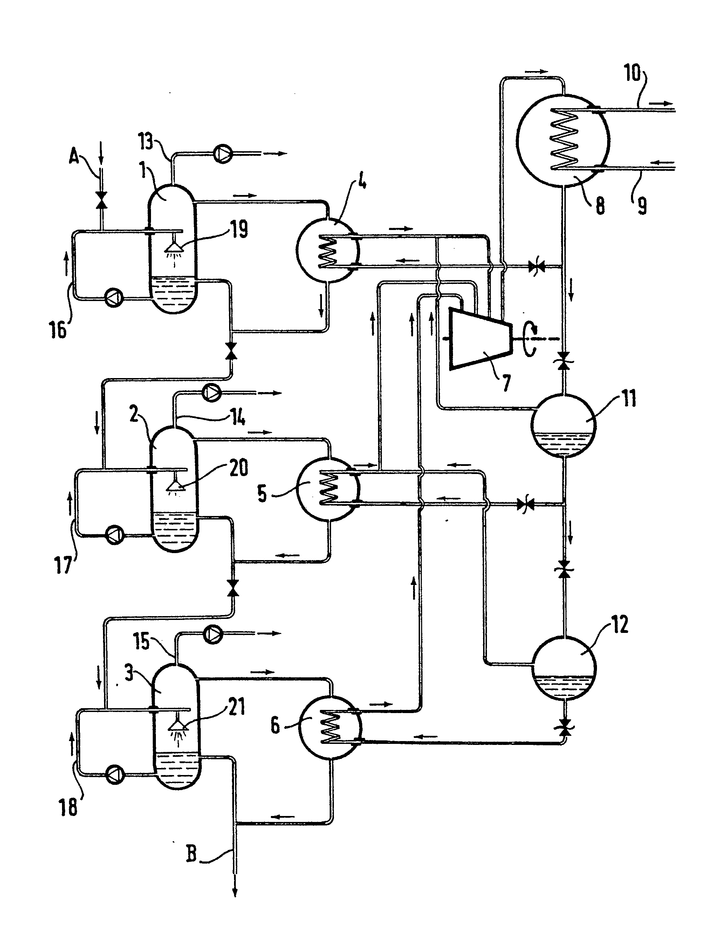

L'invention sera bien comprise à la lumière de la description d'un exemple de réalisation faite ci-après en référence au dessin annexé dans lequel:

La figure unique donne une représentation schématique d'une installation de pompe à chaleur selon l'invention.

La figure illustre le cas où il s'agit de refroidir une solution aqueuse qui contient des produits qui provoquent un précipité lors du refroidissement. Cette solution est disponible à la température de 65°C et on désire la rejeter au sol ou au système de traitement des effluents à une température de +10°C en récupérant les calories pour produire de l'eau chaude à +75°C par une pompe à chaleur.

Selon l'invention, la solution est détendue en trois étapes dans des réservoirs 1, 2 et 3 et refroidie par trois opérations de vaporisation partielle libérant à chaque fois de la vapeur d'eau pratiquement pure.

La vapeur d'eau formée est condensée à chaque niveau de pression et de température sur la surface froide de trois évaporateurs 4, 5 et 6 reliés à un compresseur frigorifique 7 à trois étages de compression. Le condensat de vapeur d'eau récupéré à la partie basse de chaque évaporateur 4, 5, 6 est mélangé à la solution sortant des réservoirs 1, 2 et 3. Il s'ensuit que le débit masse de solution refroidie est exactement le même que celui de la solution chaude arrivant en A au départ, à la différence près, le cas échéant, des précipités. Ce point est important dans le cas de l'utilistion d'eaux géothermiques qui, après usage, doivent être restituées au sol.

La vapeur du fluide frigorigène refoulée par le compresseur 7 est condensée dans un condenseur 8 dans lequel circule de l'eau à chauffer qui entre par une conduite 9 et sort par une conduite 10. Dans l'exemple de réalisation décrit, l'installation est complétée par deux réservoirs 11 et 12 de détentes intermédiaires du fluide frigorigène qui améliorent l'efficacité de la pompe à chaleur. Une partie du fluide frigorigène condensée dans le condenseur 8 est dirigée vers l'évaporateur 4 et une autre partie vers le réservoir de détente 11 qui produit de la vapeur du fluide frigorigène envoyée au compresseur 7 au niveau de pression correspondant à la sortie de l'évaporateur 4. De même, une partie du liquide frigorigène qui sort du réservoir de détente 11 est dirigée vers l'évaporateur 5 et une autre partie vers le réservoir de détente 12 qui produit de la vapeur envoyée au compresseur 7 au niveau de pression correspondant à la sortie de l'évaporateur 5. Le liquide frigorigène extrait du réservoir 12 alimente l'évaporateur 6.

La solution chaude entrant en A à 65°C sort du réservoir de détente 3 en B à 10°C.

Les réservoirs de détente 1, 2 et 3 comportent chacun une conduite de sortie respectivement 13, 14 et 15 pour les gaz incondensables. Chaque réservoir de détente 1, 2 et 3 comprend une conduite de recirculation, respectivement 16, 17 et 18, recyclant une partie du condensat vers l'organe de pulvérisation respectivement 19, 20 et 21. L'installation est complétée par un ensemble de vannes et de pompes non repérées.

A titre indicatif on peut donner l'exemple numérique suivant: la solution chaude arrivant en A à 65°C est refroidie à 46°C dans le réservoir 1 où la pression est de 0,1042 bars, elle est refoidie à 28°C dans le réservoir 2 où la pression est de 0,039 bars, et elle est refroidie enfin à 10°C dans le réservoir 3 où la pression est de 0,0127 bars.

Le fluide frigorigène est à 77,5°C dans le condenseur 8 et sa pression de 22,6 bars, dans l'évaporateur 4 le fluide frigorigène est à 40°C sous 9,9 bars, dans l'évaporateur 5 il est à 22°C sous 6,192 bars et dans l'évaporateur 6 il est à 4°C sous 3,628 bars.

L'eau à chauffer entre dans le condenseur 8 à 55°C par exemple et en sort à 75°C.

L'invention trouve une application particulièrement intéressante dans le cas de l'exploitation, pour des besoins de chauffage, des calories contenues dans des eaux géothermiques à toute température en évitant la nécessité d'utiliser de grandes quantités de matériaux spéciaux et coûteux.

## Revendications

1. Installation de chauffage d'un fluide à l'aide d'une pompe à chaleur fonctionnant à partir d'une source froide (A), constituée par une solution chargée ou corrosive, comprenant au moins un évaporateur (4, 5, 6), un compresseur (7), un condenseur (8), un fluide de cycle, le condenseur étant refroidi par un fluide à chauffer, caractérisée en ce qu'elle comprend des moyens (1, 2, 3) de détente et de vaporisation au moins partielle de ladite solution de la source froide et en ce que la vapeur produite est ensuite dirigée vers l'évaporateur (4, 5, 6) où elle se condense.

2. Installation de pompe à chaleur selon la revendication 1, caractérisée par le fait que les moyens de détente et de vaporisation sont constitués d'au moins deux chambres reliées en série (1, 2, 3), et que les vapeurs en sortant alimentent des évaporateurs (4, 5, 6) distincts.

3. Installation de pompe à chaleur selon la revendication 2, caractérisée par le fait que les évaporateurs autres que le dernier dirigent le liquide chacun vers la chambre suivante.

4. Installation de pompe à chaleur selon la revendication 3, caractérisée par le fait que le compresseur (7) ayant au moins deux étages, le fluide caloporteur provenant des évaporateurs est appliqué à l'un ou l'autre étage en fonction de sa pression.

## Patentansprüche

1. Anlage zum Aufheizen eines Fluids mit einer Wärmepumpe, die ausgehend von einer kalten Quelle (A) in Form einer belasteten oder korrosiven Lösung betrieben wird, mit einem Verdampfer (4, 5, 6), einem Kompressor (7), einem Kondensator (8) und einem Zyklusfluid, wobei der Kondensator von einem aufzuheizenden Fluid gekühlt wird, dadurch gekennzeichnet, daß sie Mittel (1, 2, 3) aufweist, mit denen die Lösung der kalten Quelle zumindest teilweise entspannt und verdampft wird, und daß der erzeugte Dampf dann in den Verdampfer (4, 5, 6) gelangt, wo er kondensiert.

2. Wärmepumpenanlage nach Anspruch 1, dadurch gekennzeichnet, daß die Entspannungs- und Verdampfungsmittel aus mindestens zwei in Reihe geschalteten Kammern (1, 2, 3) bestehen und daß die austretenden Dämpfe getrennte Verdampfer (4, 5, 6) speisen.

3. Wärmepumpenanlage nach Anspruch 2, dadurch gekennzeichnet, daß die aus den Verdampfern mit Ausnahme des letzten austretende Flüssigkeit jeweils zur nächsten Kammer geleitet wird.

4. Wärmepumpenanlage nach Anspruch 3, dadurch gekennzeichnet, daß der Kompressor (7) mindestens zweistufig ausgeführt ist und daß das Wärmeträgerfluid vom Ausgang des Verdampfers je nach seinem Druck an die eine oder andere Kompressorstufe gelangt.

## Claims

1. A fluid heating installation using a heat pump which is operated from a cold source (A) constituted by a turbid or corrosive solution, and comprising at least one evaporator (4, 5, 6), a compressor (7), a condenser (8) and a cycle fluid, the condenser being cooled down by a fluid which ought to be heated up, characterized in that it comprises means (1, 2, 3) for expanding and evaporating at least partially said solution of the cold source, and that the produced vapour is then conveyed to the evaporator (4, 5, 6) where it becomes condensed.

2. A heat pump installation according to claim 1, characterized in that the expansion and evaporation means are constituted by at least two chambers (1, 2, 3) connected in series and that the vapours leaving these chambers are fed to distinct evaporators (4, 5, 6).

3. A heat pump installation according to claim 2, characterized in that the evaporators other the last one convey the liquid to each next following chamber respectively.

4. A heat pump installation according to claim 3, characterized in that the compressor (7) having at least two stages, the heat transfer fluid coming from the evaporators is applied to one or the other stage as a function of its pressure.